# EUROPÄISCHE PATENTSCHRIFT

(11) **EP 3 035 810 B1**
(45) Veröffentlichungstag und Bekanntmachung des Hinweises auf die Patenterteilung: **28.06.2017**
(21) Anmeldenummer: 14766093.0
(22) Anmeldetag: 11.08.2014
(51) Int. Cl.: A23N 1/00, A23N 1/02, A47J 19/02

(54) **FRUCHTPRESSE FÜR ZITRUSFRÜCHTE**
FRUIT PRESS FOR CITRUS FRUIT
PRESSE-FRUITS D'AGRUMES

(30) Priorität: 22.08.2013 AT 505182013
(43) Veröffentlichungstag der Anmeldung: 29.06.2016
(73) Patentinhaber: T M P Technic-Marketing-Products GmbH, 4020 Linz (AT)
(72) Erfinder: PICHLER, Josef, A-4211 Alberndorf (AT)
(74) Vertreter: Patentanwaltskanzlei Hübscher
(86) Internationale Anmeldenummer: PCT/AT2014/050173
(87) Internationale Veröffentlichungsnummer: WO 2015/024034

(56) Entgegenhaltungen:
- WO-A1-2013/038039
- US-A- 2 522 800
- US-A- 4 896 591
- US-A- 4 917 007
- US-A- 5 188 021

## Beschreibung

### Technisches Gebiet

Die Erfindung bezieht sich auf eine Fruchtpresse für Zitrusfrüchte mit einem einen Presshub ausführenden Pressenkopf, der zwei beidseits eines Messers angeordnete, über parallele Wellen zwischen einer oberen Aufnahmestellung und einer unteren Pressstellung gegensinnig verschwenkbare Aufnahmematrizen für je eine Fruchthälfte umfasst, mit dem Pressenkopf zugeordneten Stempeln, die mit den Aufnahmematrizen in der unteren Pressstellung zusammenwirken, sowie mit einer Austragseinrichtung für die Schalen der ausgepressten Fruchthälften.

### Stand der Technik

Bei Fruchtpressen, bei denen die Presswerkzeuge aus feststehenden unteren Stempeln und mit diesen Stempeln zusammenwirkenden Aufnahmematrizen gebildet werden, die zwischen einer oberen Aufnahmestellung für die Früchte und einer unteren Pressstellung verschwenkbar sind (WO 2013/038039 A1), ergeben sich bauliche Vorteile hinsichtlich der Baubreite, weil die Aufnahmematrizen lediglich zwischen der Aufnahmestellung und der Pressstellung gegensinnig hin- und herverschwenkt werden und nicht gegensinnig umlaufen. Beim Abwärtsschwenken der Aufnahmematrizen in die Pressstellung werden die Zitrusfrüchte mit Hilfe eines zwischen den Aufnahmematrizen angeordneten Messers halbiert, sodass die Fruchthälften in den beiden Aufnahmematrizen in der unteren Pressstellung unter einem Auspressen gegen die Stempeln gedrückt werden, die in die Aufnahmematrizen eindringen. Wegen der starren Lagerung der Stempel müssen allerdings besondere Vorkehrungen getroffen werden, die Schalen der ausgepressten Früchte in Sammelbehälter auszutragen. Zu diesem Zweck sind die Stempel unterhalb von Zutrittsöffnungen vorgesehen, die mit gummielastischen Bändern überbrückt sind, sodass beim Presshub die Fruchthälften die gummielastischen Bänder an die Stempel andrücken. Beim Leerhub des Pressenkopfs werden diese Gummibänder entlastet und heben die ausgepressten Halbschalen von den Stempeln über die Zutrittsöffnungen ab. Beim Verschwenken der Aufnahmematrizen in die untere Pressstellung während des darauffolgenden Presshubs werden die ausgepressten Halbschalen von den Aufnahmematrizen seitlich in Sammelbehälter aus dem Pressbereich ausgetragen. Abgesehen davon, dass die Betriebssicherheit von der Funktion der gummielastischen Bänder abhängt, wird durch diese Schalenaustragung der Vorteil solcher Fruchtpressen hinsichtlich einer geringen Baubreite zunichte gemacht, weil die seitliche Austragung der Schalenhälfte zusätzlichen Platz in Richtung der Baubreite erfordert.

### Darstellung der Erfindung

Der Erfindung liegt somit die Aufgabe zugrunde, eine Austragseinrichtung für die ausgepressten Schalenhälften für eine Fruchtpresse der eingangs geschilderten Art so auszugestalten, dass für das Austragen der ausgepressten Schalenhälften kein die Baubreite vergrößernder Platzbedarf erforderlich wird.

Die Erfindung löst die gestellte Aufgabe dadurch, dass die Austragseinrichtung für die Schalen der ausgepressten Fruchthälften einen Austragskamm aufweist, dessen Finger in in Richtung der Wellen der Aufnahmematrizen ausgerichtete Nuten der Stempel eingreifen, und dass der Austragskamm zwischen einer unteren Ausgangsstellung mit in den Nuten der Stempel abgesenkten Fingern und einer Austragsstellung mit über die Stempel angehobenen, in Richtung der Wellen zu einer Austragöffnung abfallenden Fingern verlagerbar ist.

Durch das Vorsehen eines Austragskamms, der mit seinen Fingern in entsprechende Nuten der Stempel abgesenkt werden kann, wird der Auspressvorgang der Fruchthälften nicht behindert, jedoch die Voraussetzung geschaffen, die ausgepressten Schalenhälften von den Stempeln abzuheben und in einfacher Weise in Richtung der abfallend geneigten Finger auszutragen, wenn der Austragskamm aus den Nuten über die Stempel angehoben wird, sodass die Finger eine Austragsrutsche bilden, entlang der die ausgepressten Schalenhälften in einen Sammelbehälter abgeworfen werden. Da die Finger des Austragskamms in Richtung der Wellen der Aufnahmematrizen ausgerichtet sind, bedingt eine solche Austragseinrichtung keine Vergrößerung der Baubreite. Obwohl grundsätzlich ein Austrag zu einer vorderen Austragsöffnung möglich ist, ergeben sich günstigere Konstruktionsverhältnisse, wenn die Finger in der Austragsstellung zu einer hinteren Austragsöffnung abfallen, also einer Austragsöffnung, die in Bezug auf die einem Benützer zugekehrten Vorderseite hinter den Stempeln liegt.

Da der die Aufnahmematrizen umfassende Pressenkopf einen Presshub ausführt, kann diese Hubbewegung vorteilhaft für die Verlagerung des Austragskamms zwischen seiner unteren Ausgangsstellung und der oberen Austragsstellung genützt werden. Zu diesem Zweck kann der Austragskamm auf der der Austragsöffnung abgekehrten Seite der Stempel am Pressenkopf um eine zu den Wellen der Aufnahmematrizen senkrechten Anlenkachse verschwenkbar angelenkt sein. Mit dem Presshub des Pressenkopfs werden somit die Finger des Austragskamms in den Nuten der Stempel in die Ausgangsstellung abgesenkt, um beim anschließenden Leerhub in die Austragsstellung angehoben zu werden. Damit Bauhöhe eingespart werden kann, kann den Stempeln auf der der Austragsöffnung zugekehrten Seite ein Gleitanschlag für den Austragskamm zugeordnet werden, sodass beim Absenken in die Ausgangsstellung der Austragskamm unter einem Gleiten entlang des Gleitanschlags um seine Anlenkachse gegen den Pressenkopf angehoben wird. Beim Leerhub des Pressenkopfs nimmt dann der Austragskamm wieder seine abfallende Austragsstellung ein. Die abfallende Austragsstellung des Austragskamms kann dabei in einfacher Weise konstruktiv dadurch festgelegt werden, dass der Pressenkopf im Bereich der Anlenkachse für den Austragskamm einen den Schwenkwinkel des Austragskamms für die Austragsstellung bestimmenden Drehanschlag aufweist. Im Bedarfsfall kann dieser Drehanschlag einstellbar ausgeführt sein, um die Neigung des Austragskamms an die jeweiligen Austragsbedingungen der Zitrusfrüchte anpassen zu können.

### Kurze Beschreibung der Zeichnung

In der Zeichnung ist der Erfindungsgegenstand beispielsweise dargestellt. Es zeigen
- Fig. 1: eine erfindungsgemäße Fruchtpresse für Zitrusfrüchte in einem Schnitt senkrecht zu den Wellen der Aufnahmematrizen in der oberen Aufnahmestellung der Aufnahmematrizen,
- Fig. 2: einen Schnitt nach der Linie II-II der Fig. 1,
- Fig. 3: eine der Fig. 1 entsprechende Darstellung der Fruchtpresse mit den Aufnahmematrizen in der unteren Pressstellung und
- Fig. 4: einen Schnitt nach der Linie IV-IV der Fig. 3

### Weg zur Ausführung der Erfindung

Die dargestellte Fruchtpresse für Zitrusfrüchte weist ein von einem Gehäuse 1 umschlossenes Gestell 2 auf, das eine der Höhe nach verlaufende Führung 3 für einen Pressenkopf 4 bildet. Dieser Pressenkopf 4 wird entlang der Führung 3 mit Hilfe eines Presstriebs 5 angetrieben, der gemäß dem Ausführungsbeispiel aus einer Kurbel 6 und einer an der Kurbel 6 angelenkten Schubstange 7 gebildet wird, was jedoch nicht zwingend ist. Zum Antrieb des Presstriebs 5 dient ein Elektromotor 8 mit angeschlossenem Winkelgetriebe 9.

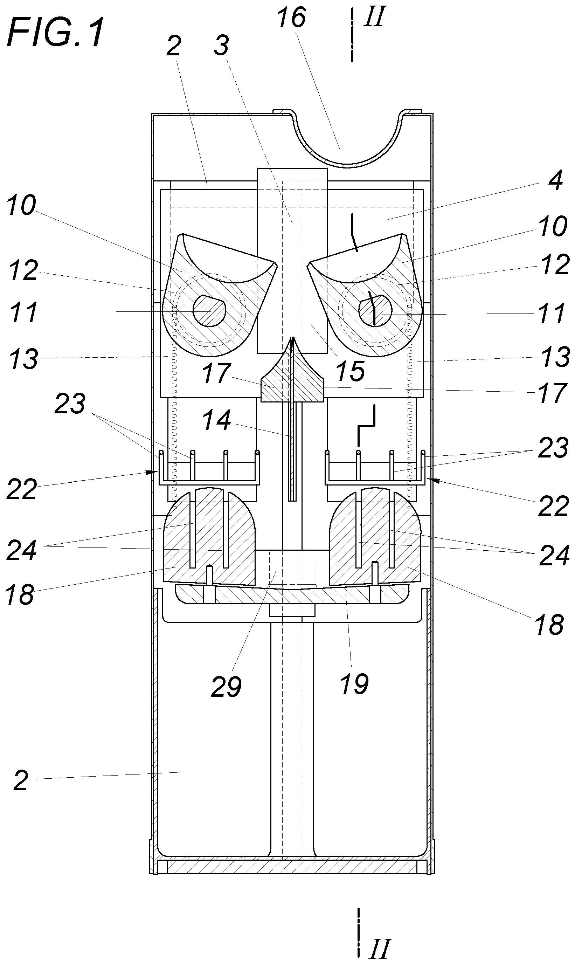

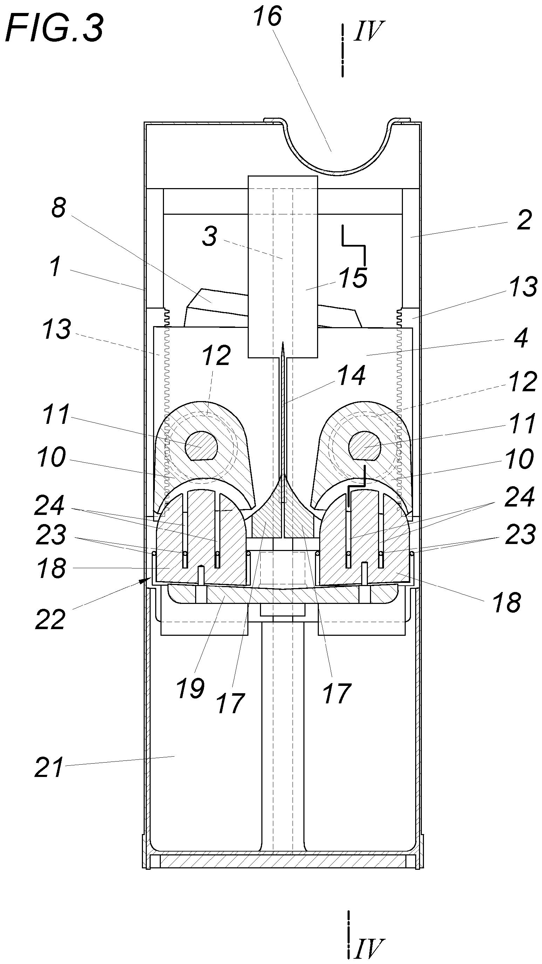

Im Pressenkopf 4 sind zwei Aufnahmematrizen 10 auf parallelen Wellen 11 gelagert, die ein Antriebsritzel 12 tragen. Diese Antriebsritzel 12 kämmen mit seitlich am Gestell 2 befestigten Zahnstangen 13, sodass bei einer Verlagerung des Pressenkopfs 4 entlang der Führung 3 die auf den Zahnstangen 13 abrollenden Antriebsritzel 12 die Aufnahmematrizen 10 während des Presshubs aus der in der Fig. 1 dargestellten oberen Aufnahmestellung in die untere Pressstellung nach der Fig. 3 und während des Leerhubs von der unteren Pressstellung wieder zurück in die Aufnahmestellung verschwenken.

Zwischen den beiden Aufnahmematrizen 10 ist ein Messer 14 am Gestell 2 befestigt, und zwar mit Hilfe eines den Pressenkopf 4 übergreifenden Messerträgers 15. Damit die Zitrusfrüchte, die über einen Zuführkanal 16 den Aufnahmematrizen 10 zugeführt werden, nach dem Schneiden während der gegensinnigen Abschwenkbewegung der Aufnahmematrizen 10 nicht aus den Aufnahmematrizen 10 schwerkraftbedingt herausgleiten können, sind den Aufnahmematrizen 10 auf dem Pressenkopf 13 Gleitführungen 17 für die Fruchthälften zugeordnet. Diese Gleitführungen 17 bilden zwischen sich eine Führung für das Messer 14.

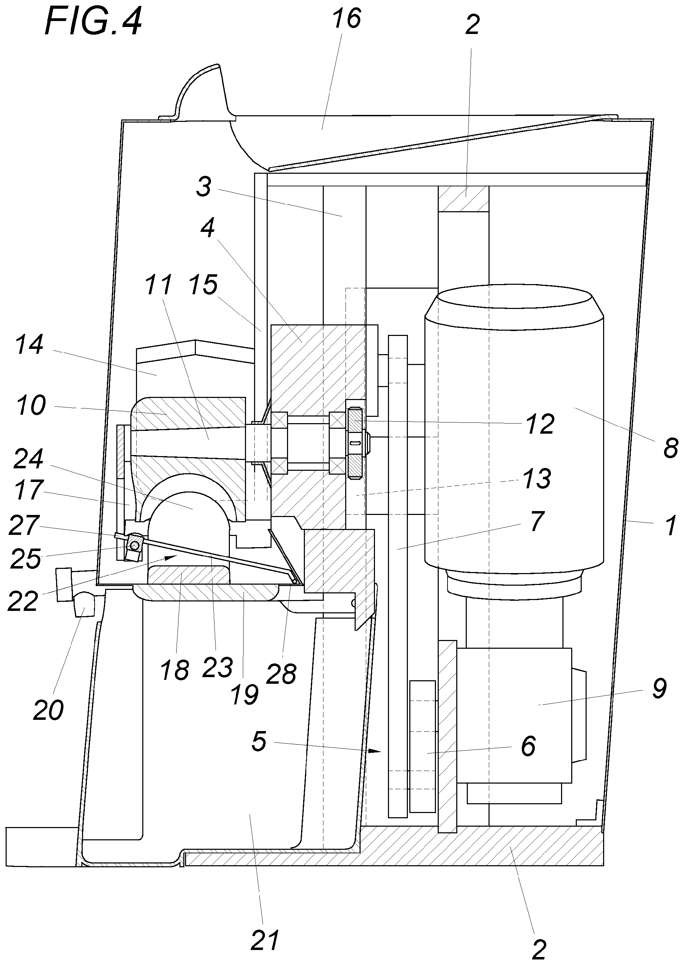

Unterhalb der Aufnahmematrizen 10 sind im Gestell 2 Stempel 18 vorgesehen, die mit den Aufnahmematrizen 10 in der unteren Pressstellung zusammenwirken, wie dies den Fig. 3 und 4 entnommen werden kann. Die Abstützung der Stempel 18 erfolgt über einen Träger 19, der im Ausführungsbeispiel an der Führung 3 befestigt ist. Werden die mit den Fruchthälften beladenen Aufnahmematrizen 10 während des Presshubs des Pressenkopfs 4 auf die Stempel 18 abgesenkt, so werden die Fruchthälften zwischen den Stempeln 18 und den Matrizen 10 ausgepresst. Der ausgepresste Saft wird auf dem einen Abfluss bildenden Träger 19 innerhalb eines Saftraums gesammelt und kann über einen Absperrhahn 20 entnommen werden.

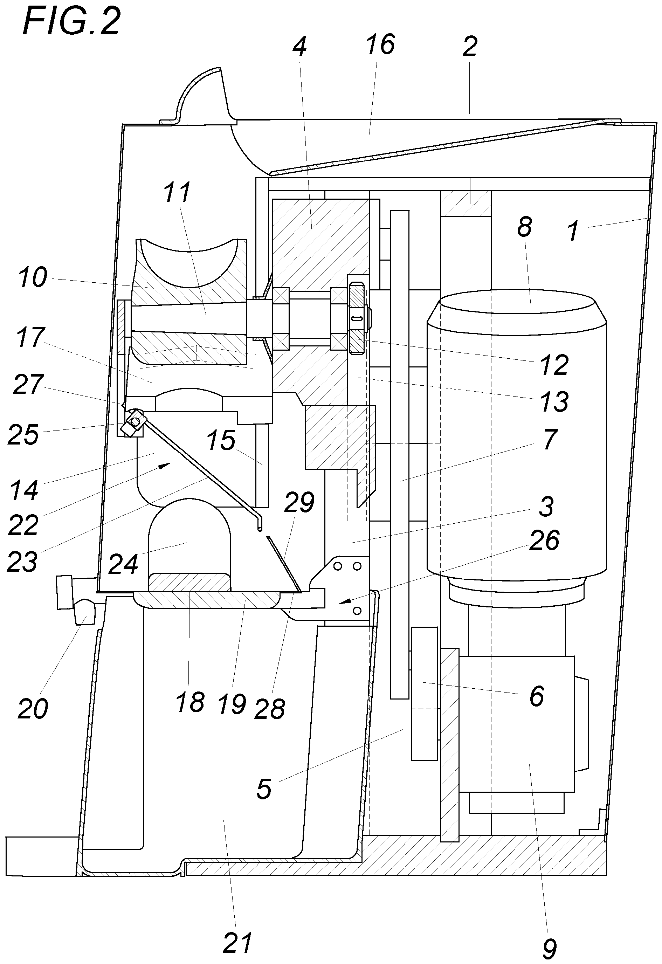

Um die ausgepressten Halbschalen der Zitrusfrüchte von den Stempeln 18 abheben und in einen unterhalb des Trägers 19 vorgesehenen Sammelbehälters 21 austragen zu können, ist eine Austragseinrichtung vorgesehen, die aus einem Austragskamm 22 mit parallelen Fingern 23 gebildet wird. Die Stempel 18 sind mit in Richtung der Wellen 11 der Aufnahmematrizen 10 ausgerichteten Nuten 24 zur Aufnahme der Finger 23 des Austragskamms 22 versehen, der um eine zu den Wellen 11 der Aufnahmematrizen 10 senkrechte Anlenkachse 25 am Pressenkopf 4 angelenkt ist, und zwar unterhalb der Gleitführungen 17. Da die Anlenkung des Austragskamms 22 auf der dem Benützer zugekehrten Vorderseite der Gleitführungen 17 vorgesehen ist, fällt der Austragskamm 22 in der in Fig. 2 dargestellten angehobenen Austragsstellung nach hinten zu einer in den Sammelbehälter 21 mündenden Austragsöffnung 26 ab. Diese nach hinten abfallende Austragsstellung wird durch einen Drehanschlag für den Austragskamm 22 konstruktiv festgelegt. Dieser Drehanschlag kann in einfacher Weise durch ein über die Anlenkachse 25 vorstehendes Anschlagende 27 wenigstens eines Fingers 23 gebildet werden, das mit einem Gegenanschlag an der Gleitführung 17 zusammenwirkt. In der abgesenkten Pressstellung des Pressenkopfs 4 ruht der Austragskamm 22 auf einem durch den Träger 19 gebildeten Gleitanschlag 28, der beim Absenken des Pressenkopfs 4 ein Verschwenken des Austragskamms 22 um seine Anlenkachse 25 nach oben bewirkt und daher Bauhöhe spart. In der abgesenkten Pressstellung sind die Finger 23 des Austragskamms 22 in den Nuten 24 der Stempel 18 versenkt, sodass das Auspressen der Fruchthälften durch die Austragseinrichtung nicht behindert wird. Wird nach dem Auspressen der Pressenkopf 4 über den Presstrieb 5 in einem Leerhub angehoben, so wird der Austragskamm 22 zunächst unter Mitnahme der auf den Stempeln 18 verbleibenden Schalenhälften in die anschlagbegrenzte Schwenklage der Austragsstellung verschwenkt und über den Stempel 18 angehoben, sodass die Halbschalen entlang der abfallenden Finger 23 über eine den Saftraum oberhalb des Trägers 19 begrenzende Wand 29 zur Austragsöffnung 26 abrutschen und in den Sammelbehälter 21 fallen.

## Patentansprüche

1. Fruchtpresse für Zitrusfrüchte mit einem einen Presshub ausführenden Pressenkopf (4), der zwei beidseits eines Messers (14) angeordnete, über parallele Wellen (11) zwischen einer oberen Aufnahmestellung und einer unteren Pressstellung gegensinnig verschwenkbare Aufnahmematrizen (10) für je eine Fruchthälfte umfasst, mit dem Pressenkopf (4) zugeordneten Stempeln (18), die mit den Aufnahmematrizen (10) in der unteren Pressstellung zusammenwirken, sowie mit einer Austragseinrichtung für die Schalen der ausgepressten Fruchthälften, **dadurch gekennzeichnet, dass** die Austragseinrichtung für die Schalen der ausgepressten Fruchthälften einen Austragskamm (22) aufweist, dessen Finger (23) in in Richtung der Wellen (11) der Aufnahmematrizen (10) ausgerichtete Nuten (24) der Stempel (18) eingreifen, und dass der Austragskamm (22) zwischen einer unteren Ausgangsstellung mit in den Nuten (24) der Stempel (18) abgesenkten Fingern (23) und einer Austragsstellung mit über die Stempel (18) angehobenen, in Richtung der Wellen (11) zu einer Austragöffnung (26) abfallenden Fingern (23) verlagerbar ist.

2. Fruchtpresse nach Anspruch 1, **dadurch gekennzeichnet, dass** der Austragskamm (22) auf der der Austragsöffnung (26) abgekehrten Seite der Stempel (18) am Pressenkopf (4) um eine zu den Wellen (11) der Aufnahmematrizen (10) senkrechten Anlenkachse (25) verschwenkbar angelenkt ist.

3. Fruchtpresse nach Anspruch 2, **dadurch gekennzeichnet, dass** den Stempeln (18) auf der der Austragsöffnung (26) zugekehrten Seite ein Gleitanschlag (28) für den Austragskamm (22) zugeordnet ist.

4. Fruchtpresse nach Anspruch 2 oder 3, **dadurch gekennzeichnet, dass** der Pressenkopf (4) im Bereich der Anlenkachse (25) für den Austragskamm (22) einen den Schwenkwinkel des Austragskamms (22) für die Austragsstellung bestimmenden Drehanschlag aufweist.

## Claims

1. Fruit press for citrus fruits, comprising a press head (4), which executes a press stroke and comprises two accommodating dies (10), each for one fruit half, which are arranged on both sides of a blade (14) and can be pivoted in opposite directions via parallel shafts (11) between an upper accommodating position and a lower pressing position, comprising rams (18) which are assigned to the press head (4) and interact with the accommodating dies (10) in the lower pressing position, and comprising a discharging device for the skins of the pressed fruit halves, **characterised in that** the discharging device for the skins of the pressed fruit halves has a discharging comb (22), of which the fingers (23) engage in grooves (24) of the rams (18), which grooves are oriented in the direction of the shafts (11) of the accommodating dies (10), and the discharging comb (22) is displaceable between a lower starting position, with fingers (23) lowered in the grooves (24) of the rams (18), and a discharging position, with fingers (23) raised above the rams (18) and sloping down in the direction of the shafts (11) to a discharging opening (26).

2. Fruit press as claimed in claim 1, **characterised in that** on the side of the rams (18) facing away from the discharging opening (26), the discharging comb (22) is pivotably articulated to the press head (4) about an articulated spindle (25) which is perpendicular to the shafts (11) of the accommodating dies (10).

3. Fruit press as claimed in claim 2, **characterised in that** a sliding stop (28) for the discharging comb (22) is assigned to the rams (18) on the side facing the discharging opening (26).

4. Fruit press as claimed in claim 2 or 3, **characterised in that** in the region of the articulated spindle (25) for the discharging comb (22), the press head (4) comprises a rotating stop which determines the pivoting angle of the discharging comb (22) for the discharging position.

## Revendications

1. Presse-fruits pour des agrumes avec une tête de pressage (4) effectuant une course de pressage, qui comprend deux matrices de réception (10), destinées chacune à une moitié de fruit, disposées des deux côtés d'une lame (14) et pouvant pivoter sur des arbres (11) parallèles en sens contraire l'une de l'autre entre une position de réception haute et une position de pressage basse avec des poinçons (18) associés à la tête de pressage (4), qui concourent avec les matrices de réception (10) dans la position de pressage basse, ainsi qu'un dispositif d'évacuation pour les écorces des moitiés de fruit pressées, **caractérisé en ce que** le dispositif d'évacuation pour les écorces des moitiés de fruit pressées présente un peigne d'évacuation (22) dont les dents (23) viennent s'insérer dans des rainures (24) du poinçon (18) orientées dans la direction des arbres (11) des matrices de réception (10), et **en ce que** le peigne d'évacuation (22) peut être déplacé entre une position initiale basse avec les dents (23) descendues dans les rainures (24) des poinçons (18), et une position d'évacuation avec les dents (23) relevées au-dessus des poinçons (18) et inclinées dans la direction des arbres (11) vers un orifice d'évacuation (26).

2. Presse-fruits selon la revendication 1, **caractérisé en ce que** le peigne d'évacuation (22) est articulé de façon pivotante autour d'un axe d'articulation (25) disposé perpendiculairement aux arbres (11) des matrices de réception (10), sur le côté, opposé à l'orifice d'évacuation (26), du poinçon (18) au niveau de la tête de pressage (4).

3. Presse-fruits selon la revendication 2, **caractérisé en ce qu'**une butée coulissante (28) pour le peigne d'évacuation (22) est associée aux poinçons (18) sur le côté tourné vers l'orifice d'évacuation (26).

4. Presse-fruits selon la revendication 2 ou 3, **caractérisé en ce que** la tête de pressage (4) présente dans la zone de l'axe d'articulation (25), pour le peigne d'évacuation (22), une butée de rotation définissant l'angle de pivotement du peigne d'évacuation (22) pour la position d'évacuation.
